# EUROPEAN PATENT APPLICATION

(11) **EP 4 491 457 A1**
(43) Date of publication of application: **15.01.2025**
(21) Application number: 24187406.4
(22) Date of filing: 09.07.2024
(51) Int. Cl.: B60P 7/08

(54) **RETAINING STRUCTURE OF TRANSPORT VEHICLE AND TRANSPORT VEHICLE**

(30) Priority: 13.07.2023 JP 2023115428
(71) Applicant: Nabtesco Corporation, Tokyo 102-0093 (JP)
(72) Inventor: Ishida, Taisuke, Chiyoda-ku, Tokyo, 102-0093 (JP); Uchihara, Masato, Chiyoda-ku, Tokyo, 102-0093 (JP)
(74) Representative: Grünecker Patent- und Rechtsanwälte PartG mbB

(57) **Abstract**

The present invention relates to a retaining structure of a transport vehicle (1, 201, 301, 401, 501) and to a transport vehicle (1, 201, 301, 401, 501). The retaining structure includes a guide track (12, 60), a base block (13, 113, 613), a guidable portion (25, 65), and a fastener (30, 71). The guide track (12, 60) is provided on a vehicle body (2). The base block (13, 113, 613) can support a retaining member (15) configured to retain a transportable object (14). The guidable portion (25, 65) is configured to move together with the base block (13, 113, 613) as guided along the guide track (12, 60). The fastener (30, 71) is configured to secure the base block (13, 113, 613) on the guide track (12, 60) at a certain position.

## Description

### TECHNICAL FIELD

The present invention relates to a retaining structure of a transport vehicle and a transport vehicle.

### BACKGROUND

Known transport vehicles may be used in factories or other facilities while being combined with transportable objects (see, for example, Patent Literature 1).

A transport vehicle is disclosed in Patent Literature 1, which may be an unmanned transport vehicle that is configured to move along a defined travel route in a factory. The transportable object by the transport vehicle (the carriage to be transported) has wheels that are in contact with a street or ground surface and also has a loading rack on which cargo may be placed. The transport vehicle has a coupling device mounted on it, and the coupling device includes a pair of L-shaped arms for holding the transportable object. The coupling device is configured to hold a to-be-held portion of the transportable object between the arms, by moving and rotating the arms. The transportable object has a gantry frame accommodated inside the wheels provided at the four corners. The to-be-held portion of the transportable object is in the top portion of the gantry frame.

The transport vehicle may move to duck under the gantry frame of the transportable object. After this, the transport vehicle activates the coupling device to hold the to-be-held portion with its arms. In this way, the transportable object may be coupled to the transport vehicle and transported to a destination following the movement of the transport vehicle.

### RELEVANT REFERENCE

### LIST OF RELEVANT PATENT LITERATURE

Patent Literature 1: Japanese Patent Application Publication No. 2010-036644

### SUMMARY

The transport vehicle disclosed in Patent Literature 1 can hold any transportable objects with the arms of its coupling device as long as the transportable objects all have the same width and the same to-be-held portion. The transport vehicle, however, face difficulties in holding various types of transportable objects as they have different sizes, shapes, and other specifications.

For the transport vehicle disclosed in Patent Literature 1, it is difficult to cause the arms to hold a different portion of the transportable object than the to-be-held portion. Therefore, the to-be-held portion of the transportable object needs to be accurately positioned. For this reason, the transport vehicle disclosed in Patent Literature 1 is required to have a complicated mechanism including various sensors in order to successfully hold (retain) the transportable object.

An object of the present invention is to provide a retaining structure of a transport vehicle and a transport vehicle that are capable of transporting a variety of objects having different specifications while the retaining structure and transport vehicle still have simplified configuration.

An aspect of the present invention provides a retaining structure of a transport vehicle. The retaining structure includes a guide track provided on a vehicle body; a base block for supporting a retaining member configured to retain a transportable object; a guidable portion configured to move together with the base block as guided along the guide track; and a fastener configured to secure the base block on the guide track at a certain position.

In the above-described implementation, the retaining member can be repositioned on the vehicle body by releasing the base block secured by the fastener. The base block and guidable portion are then moved along the guide track to reach a desired position. Subsequently, the base block is secured at a certain position on the guide track using the fastener. As a result, the retaining member can be repositioned at an appropriate position to retain the transportable object. In this manner, the retaining structure can retain various transportable objects different in terms of the size, shape and other specifications by appropriately adjusting the position of the retaining members on the vehicle body. Be employing the retaining structure relating to the implementation, the transport vehicle can transport various transportable objects having different sizes and shapes.

The guide track may include a recess opening toward one direction and extending in a direction intersecting with a vertical direction. The guide track may be constituted by a guide groove having a restriction flange projecting inwardly from an opening edge of the recess, The guidable portion may be movably housed in the recess. The fastener may be constituted by a coupling that is configured to secure the guidable portion such that the guidable portion is pressed against the restriction flange.

In the implementation, to reposition the retaining member on the vehicle body, the guidable portion stops applying a pressure to the restriction flange (guide groove). The base block and guidable portion are then moved along the guide groove to reach a desired position. Here, the guidable portion moves in the guide groove. Subsequently, the coupling is used to press and secure the guidable portion onto the restriction flange of the guide groove. As a result, the retaining member can be repositioned at an appropriate position to retain the transportable object. The guidable portion, which is connected to the base block, is reliably supported by the guide groove having the restriction flange. Accordingly, the retaining member configured as described above to retain the transportable object can be more reliably supported on the vehicle body.

The guide groove may open upward in the vertical direction. An upper edge of an opening of the guide groove may be constituted by a substantially horizontal flat surface.

In this way, the base block configured to support the retaining member can be stably supported on the substantially horizontal flat surface of the upper edge of the opening of the guide groove. The upper edge of the opening of the guide groove, on which the base block is placed, is a flat surface. This enables the base block to move smoothly above the guide groove in order to reposition the retaining member.

The guide track may be constituted by a plurality of guide grooves. The plurality of guide grooves may each correspond to the guide groove. The plurality of guide grooves may be provided on the vehicle body. The plurality of guide grooves may have a plurality of openings opening upward in the vertical direction, and the plurality of guide grooves may be in a one-to-one correspondence with the plurality of openings. Flat surfaces of upper edges of the plurality of openings may be at a same height.

In this way, an object can be stably placed across the upper edges of the plurality of guide grooves. According to the above configuration, the dead space above the guide grooves can be effectively used to conveniently transport objects.

The guide track may be detachably attached to the vehicle body.

Depending on the transportable object to be transported and the destination, the guide track can be replaced with a different guide track having appropriate size and shape. Thus, transportable objects having a greater variety of specifications can be transported. This advantageous effect can be achieved when the transport vehicle is used in various environments.

The guide track may be provided on a plurality of blocks separated from each other.

In this case, the position and orientation of the guide track on the vehicle body can be determined appropriately depending on the specifications of the transportable object to be transported, while the guide track is prevented from occupying an unnecessary space. Thus, the transport vehicle can transport transportable objects having a great variety of specifications while achieving reduced size and weight.

An aspect of the present invention provides a transport device including: a vehicle body having a drive wheel; a guide track provided on the vehicle body; a base block for supporting a retaining member configured to retain a transportable object; a guidable portion configured to move together with the base block as guided along the guide track; and a fastener configured to secure the base block on the guide track at a certain position.

In the transport vehicle described above, various transportable objects different in terms of the size, shape and other specifications can be retained by appropriately adjusting the position of the retaining member on the vehicle body. Thus, the transport vehicle described above can transport a great variety of transportable objects having different sizes and shapes.

The guide track may be preferably partly positioned directly above the drive wheel.

In this case, a load acts on the drive wheel from directly above or from the guide track and retaining member. The drive force produced by the drive wheel can thus efficiently act on the road or street surface during the traveling of the transport vehicle. Accordingly, the transport vehicle can keep traveling stably and turn well.

### ADVANTAGEOUS EFFECTS

In the retaining structure of the transport vehicle described above, the base block and guidable portion are movable along the guide track on the vehicle body, and the base block can be secured onto the guide track at a certain position by means of the fastener. Therefore, the position of the retaining member configured to retain the transportable object can be appropriately adjusted, as well as the position of the base block. The retaining structure of the transport vehicle relating to the present invention can thus provide for simplified configuration and allow the transport vehicle to transport various transportable objects having different specifications.

### BRIEF DESCRIPTION OF THE DRAWINGS

Fig. 1 is a perspective view showing a transport vehicle relating to a first embodiment.
Fig. 2 is a sectional view along a line II-II in Fig. 1.
Fig. 3 is a perspective view showing a guidable portion and a fastener relating to the first embodiment.
Fig. 4 is a perspective view showing the guidable portion and fastener relating to the first embodiment from a different angle.
Fig. 5 is a sectional view along a line V-V in Fig. 1.
Fig. 6 is a perspective view showing another way of using the transport vehicle relating to the first embodiment.
Fig. 7 is a perspective view showing a support portion of a retaining member relating to a second embodiment.
Fig. 8 is a sectional view along a line VIII-VIII in Fig. 7.
Fig. 9 is a perspective view showing a transport vehicle relating to a third embodiment.
Fig. 10 is a perspective view showing a transport vehicle relating to a fourth embodiment.
Fig. 11 is a perspective view showing a transport vehicle relating to a fifth embodiment.
Fig. 12 is a perspective view showing a transport vehicle relating to a sixth embodiment.
Fig. 13 is a sectional view showing a support portion relating to a seventh embodiment and corresponding to Figs. 2 and 8.

### DESCRIPTION OF THE PREFERRED EMBODIMENTS

The embodiments of the present invention will be hereinafter described with reference to the drawings. In the following embodiments, like elements will be denoted by the same reference signs and redundant descriptions will be partly omitted. The drawings may include arrows UP, FR and LH respectively indicating the upside in the vertical direction, the front side of the transport vehicle, and the left side when the transport vehicle faces the front side. In the following description, the terms "upper" or "above" refer to the direction indicated by the arrow UP, and the terms "lower" or "below" refer to the opposite direction. In addition, the term "front-rear direction" denotes the direction including the side indicated by the arrow FR, and the term "left-right direction" refers to the direction including the side indicated by the arrow LH.

### <First Embodiment>

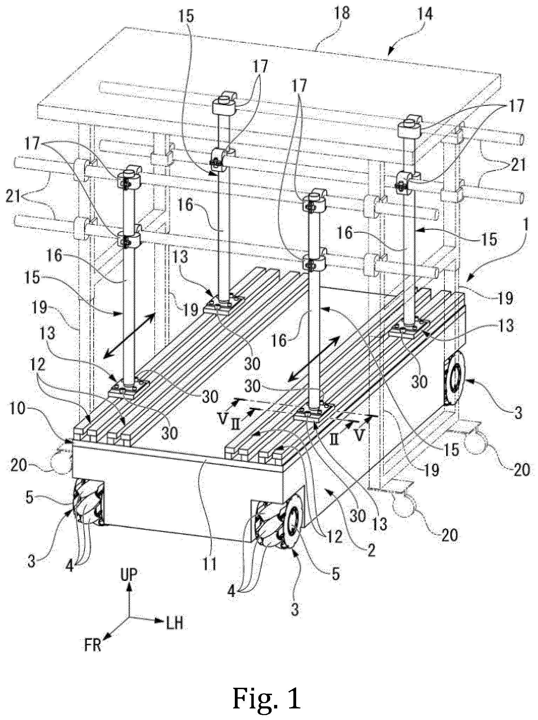

Fig. 1 is a perspective view showing a transport vehicle 1 relating to a first embodiment. The transport vehicle 1 relating to the first embodiment is an unmanned transport vehicle that is subject to control by a control unit to drive itself within a factory or site. The transport vehicle 1 may include a control unit for controlling the transport vehicle 1. The transport vehicle 1 may be controlled by a control unit located outside the transport vehicle 1. The transport vehicle 1 has a vehicle body 2 and a plurality of drive wheels 3. The vehicle body 2 has a substantially rectangular parallelepiped shape. The drive wheels 3 are located below the four corners of the vehicle body 2. The drive wheels 3 are mecanum wheels.

The drive wheels 3 each include a plurality of barrels 4 and a barrel holder 5. The barrels 4 are barrel-shaped rotating bodies. The barrel holder 5 supports the barrels 4 rotatably on its circumference. The barrel holder 5 of each drive wheel 3 is driven by a drive unit, not shown, constituted by a motor and a speed reducer. The barrels 4 are rotatably held on the circumference of the barrel holder 5 at an angle to the axis of rotation of the barrel holder 5.

The control unit may control the direction of the rotation and the torque of the individual drive wheels 3 (barrel holders 5). This allows the transport vehicle 1 to move in any desired directions. The drive wheels 3 provided on the left side of the transport vehicle 1 are arranged such that the barrels 4 held on the circumference of the barrel holder 5 are inclined toward a certain direction, and the drive wheels 3 provided on the right side are arranged such that the barrels 4 are inclined toward the opposite direction.

The vehicle body 2 has a flat upper surface. On the upper surface of the vehicle body 2, a carriage retaining block 10 is mounted. The carriage retaining block 10 is removably attached to the upper surface of the vehicle body 2 by bolting or other means. The carriage retaining block 10 has a base plate 11 that is shaped like a rectangular plate and that has approximately the same size as the upper surface of the vehicle body 2. The base plate 11 has, on its upper side, a plurality of guide grooves 12 parallel to each other and extending along the front-rear direction. In the present embodiment, two guide grooves 12 are provided on the right side of the center of the base plate 11, and another two guide grooves 12 are provided on the left side. The guide grooves 12 constitute a guide track relating to the first embodiment that extends in a direction intersecting with the vertical direction.

In the present embodiment, two base blocks 13 are attached to each of the outer two guide grooves 12 of the four guide grooves 12. Attached to each base block 13 is a retaining member 15 configured to retain a carriage to be transported 14, which is a form of a transportable object. The retaining member 15 has a support pipe 16 and upper and lower or two clamping devices 17. The support pipe 16 rises upward from the base block 13. The upper and lower or two clamping devices 17 are attached to the support pipe 16 such that their height can be adjusted.

The carriage to be transported 14 includes a placement plate 18, leg pillars 19, and casters 20. Objects can be placed on the placement plate 18. In addition, workers may sit or stand on the placement plate 18. In other words, the placement plate 18 can be used as a scaffold for the workers. The four leg pillars 19 extend downward from near the four corners of the placement plate 18. The casters 20 are attached to the lower end of the leg pillars 19. To the front two (left and right) leg pillars 19 of the carriage to be transported 14, two pipes 21 extending in the left-right direction are attached while being separated from each other in the top-down direction. To the rear two (left and right) leg pillars 19 of the carriage to be transported 14, similar two pipes 21 extending in the left-right direction are attached while being separated from each other in the top-down direction. The pipes 21 are positioned higher than the carriage retaining block 10 of the transport vehicle 1. The casters 20, which are attached to the lower end of the leg pillars 19, are configured to swing. Therefore, upon application of an external force in a predetermined direction to the carriage to be transported 14 from the transport vehicle 1, the casters 20 rotate in the direction in which the external force acts. The carriage to be transported 14 can thus move in the direction in which the transport vehicle 1 is pushed.

In order to transport the carriage to be transported 14, the transport vehicle 1 is positioned between the left and right leg pillars 19 of the carriage to be transported 14. The carriage retaining block 10, which is on the transport vehicle 1, is positioned below the placement plate 18 of the carriage to be transported 14. After this, to the base blocks 13 on the left and right guide grooves 12, the retaining members 15 are attached such that the support pipes 16 are erected upward. The retaining members 15 are disposed in front of and behind the carriage to be transported 14, and the upper and lower clamping devices 17 are connected to the corresponding pipes 21 of the carriage to be transported 14.

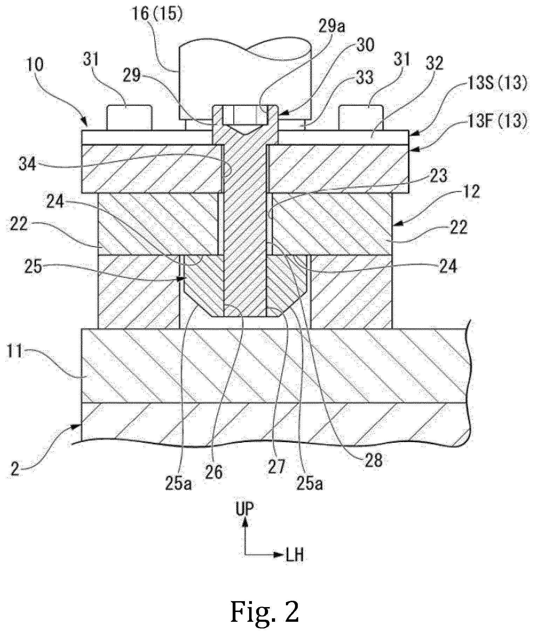

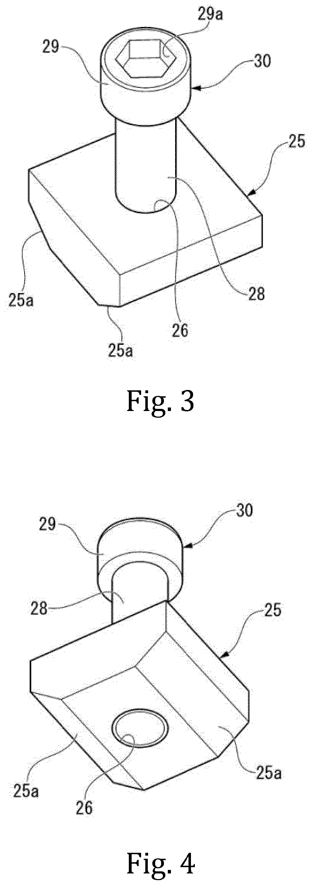

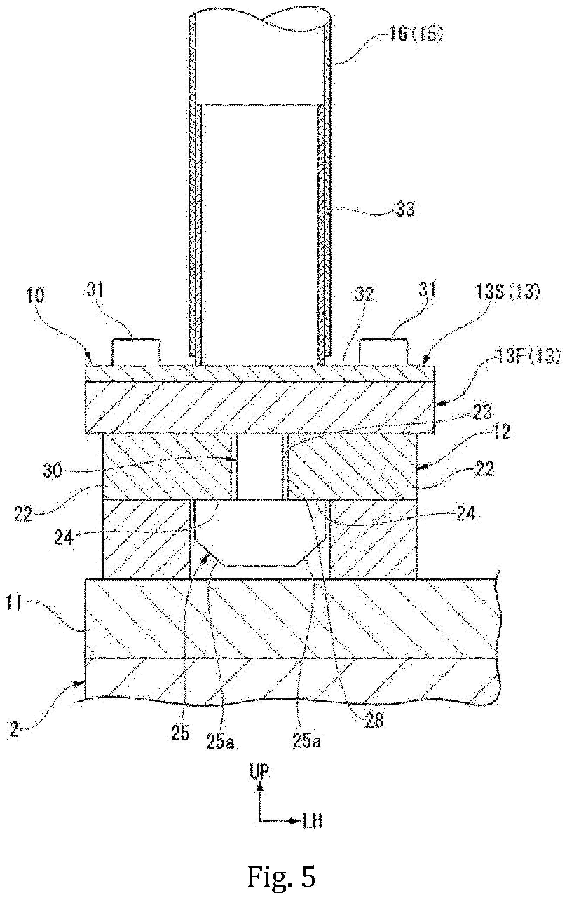

Fig. 2 is a sectional view along the line II-II in Fig. 1. Fig. 3 is a perspective view showing a guidable block 25 to which a coupling 30 (described below) is attached. Fig. 4 is a perspective view showing the guidable block 25 having the coupling 30 attached from a different angle. Fig. 5 is a sectional view along the line V-V in Fig. 1. As shown in Figs. 2 and 5, the guide grooves 12 on the carriage retaining block 10 are each constituted by a pair of groove forming blocks 22 having an L-shaped cross-sectional shape that are joined onto the upper surface of the base plate 11. The groove forming blocks 22 have an L-shaped cross-section extending long in one direction. One of the ends of the L-shaped cross-section is welded to the upper surface of the base plate 11. Between the non-welded ends of the groove forming blocks 22, a slit 23 (opening) having a certain width extends along the direction in which the groove forming blocks 22 extend. Each guide groove 12 thus has the slit 23. If there are two or more guide grooves 12, that is, if a plurality of guide grooves 12 are provided on the vehicle body, a plurality of slits 23 are provided in a one-to-one correspondence with the guide grooves 12. As for the guide grooves 12, the slits 23 are provided such that the flat surfaces of their upper edges are all at the same height. The guide grooves 12 described above each have a recess extending in the front-rear direction (the direction intersecting with the vertical direction), and the recess is defined by the upper surface of the base plate 11 and the raised walls of the left and right groove forming blocks 22. This recess has restriction flanges 24 at the opening edge. The restriction flanges 24 are part of the horizontal walls of the left and right groove forming blocks 22 and project inwardly.

The guide grooves 12 configured as described above each have a bag-shaped portion (excluding the slit 23), which can accommodate the guidable block 25 such that the guidable block 25 is movable in the front-rear direction. The guidable block 25 is shaped like a rectangular cuboid that has the short side extending in the top-bottom direction. As shown in Figs. 3 and 4, the guidable block 25 has a threaded hole 26 extending therethrough in the top-bottom direction. A coupling 30 having an externally threaded portion 27 is screwed into the threaded hole 26. The coupling 30 has a shaft portion 28, the mentioned externally threaded portion 27, and a head 29. The shaft portion 28 has a predetermined outer diameter that is less than the width of the slit 23 of the guide groove 12. The externally threaded portion 27 constitutes one of the ends of the shaft portion 28. The head 29 constitutes the other end of the shaft portion 28. The head 29 of the coupling 30 has an outer diameter that is greater than the width of the slit 23. The end surface of the head 29 has a tool engagement hole 29a for fittingly receiving a tightening tool.

The corners of the lower end of the guidable block 25 have beveled portions 25a. The beveled portions 25a extend along the front-rear direction and can contribute to preventing interference between (i) the guidable block 25 and (ii) welded portions (weld beads) that are present between the base plate 11 and the left and right groove forming blocks 22. According to the present embodiment, when seen from above, the guidable block 25 is square-shaped, but can be alternatively shaped like a rectangle having the long side extending in the front-rear direction and the short side extending in the left-right direction. The length of the guidable block 25 in the left-right direction is preferably greater than the width of the bag-shaped portion of the guide groove 12 in the left-right direction. This can prevent the guidable block 25 from being misoriented when received in the guide groove 12. According to the present embodiment, the guidable block 25 constitutes a guidable portion configured to move together with the base block 13 as guided along the guide groove 12 (guide track).

The base block 13 includes a first block 13F and a second block 13S. The first block 13F is placed on the upper edge of the slit 23 of the guide groove 12. The second block 13S is fastened and secured onto the first block 13F by means of a plurality of bolts 31 while being overlaid on the upper surface of the first block 13F. The first block 13F is made from a metal plate having a certain thickness and having a width in the left-right direction that is greater than the width of the upper edge of the guide groove 12. The upper edge of the slit 23 on which the first block 13F is placed is a substantially horizontal flat surface. The slits 23 of the guide grooves 12 are provided such that the flat surfaces of their upper edges are at the same height.

The second block 13 includes a plate portion 32 and a tubular portion 33. The plate portion 32 is overlaid on the top surface of the first block 13F and is a metal plate. The tubular portion 33 is welded to the upper surface of the plate portion 32 substantially at the center and is made of a metal. The plate portion 32 is fastened and secured onto the first block 13F using a plurality of bolts 31. The tubular portion 33 rises upward from the upper surface of the plate portion 32 such that its central axis is directed upward in the vertical direction. The outer surface of the tubular portion 33 is configured to fittingly mate with the lower end of the support pipe 16 of the retaining member 15. The retaining member 15 can be supported by the base block 13 as the lower end of the support pipe 15 fittingly mates with the tubular portion 33.

The plate portion 32 of the second block 13S is shorter in the front-rear direction than the first block 13F. The first block 13F has a front portion and a rear portion respectively extending forward and rearward beyond the second block 13S. The front and rear portions have a through hole 34 (see Fig. 2) penetrating the first block 13F in the top-bottom direction. The through hole 34 receives the shaft portion 28 of the coupling 30 inserted from above. The shaft portion 28 extending through the through hole 34, so that the externally threaded portion 27 on the tip side is screwed into the guidable block 25 in the guide groove 12. As the coupling 30 is further tightened by a tightening tool, the externally threaded portion 27 and the guidable block 25 are screwed together increasingly deeply. The upper edge of the guidable block 25 eventually butts up against the left and right restriction flanges 24 of the guide groove 12. The left and right restriction flanges 24 are thus rigidly sandwiched between and secured by the head 29 of the coupling 30 and the guidable block 25. As a result, the base block 13, which supports the corresponding retaining member 15, is secured onto the guide groove 12 at a certain position. If the coupling 30 is loosened after this, the base block 13 can be repositioned and readjusted.

According to the present embodiment, the carriage retaining block 10 secured onto the vehicle body 2 has four guide grooves 12 parallel to each other and arranged next to each other in the left-right direction. Any one or more of the guide grooves 12 can be selected, and the base blocks 13 can be secured onto the selected guide grooves 12 at a certain position. The retaining members 15, which are supported by the base blocks 13, can be thus flexibly arranged to adjust the width between them and their positions in the left-right direction.

The groove forming blocks 22 constituting the guide grooves 12 are heavy and robust structures. According to the present embodiment, the groove forming blocks 22 are arranged directly above the four drive wheels 3. Therefore, the guide track (guide grooves 12) is partly positioned directly above the drive wheels 3. In this case, a load acts on the drive wheels 3 from directly above or from the guide track (guide grooves 12) and retaining members 15. The drive force produced by the drive wheels 3 can thus efficiently act on the road or street surface during the traveling of the transport vehicle 1. Accordingly, the transport vehicle 1 can keep traveling stably and turn well.

The retaining structure of the transport vehicle 1 relating to the present embodiment includes the base blocks 13 supporting the retaining members 15, and the guidable blocks 25 in the guide grooves 12. The base blocks 13 and guidable blocks 25 are movable along the guide grooves 12 on the vehicle body 2. The base blocks 13 can be secured at any position on the guide grooves 12 using the couplings 30, which is a fastener. To reposition the retaining members 15 on the vehicle body 2, the couplings 30 are loosened to release the base blocks 13, and the base blocks 13 and guidable blocks 25 are then moved along the guide grooves 12 to reach a desired position. Subsequently, the base blocks 13 are secured at a certain position on the guide grooves 12 using the couplings 30. As a result, the retaining members 15 can reposition and secure the carriage to be transported 14 at an appropriate position.

The retaining structure relating to the present embodiment can thus retain the carriage to be transported 14 by appropriately adjusting the position of the retaining members 15 supported on the vehicle body 2 in the above-described manner, irrespective of the specifications of the carriage to be transported 14 such as the size and shape. The transport vehicle 1 can thus transport the carriage to be transported 14 irrespective of its specifications such as the size and shape. The retaining structure relating to the present embodiment can thus provide for simplified configuration and allow the transport vehicle 1 to transport the carriage to be transported 14 irrespective of its specifications.

As for the retaining structure relating to the present embodiment, the guide grooves 12 constitute the guide track for guiding the guidable blocks 25 (guidable portion) along with the base blocks 13. The guide grooves 12 each have the recess opening upward (in one direction) and extending in the front-rear direction (the direction intersecting with the vertical direction). Each guide groove 12 has, at the opening edge of the recess, the restriction flanges 24 projecting inwardly. In the recess of the guide groove 12, the guidable block 25 is movably housed. The guidable block 25 can be secured by means of the coupling 30, which is a fastener, by being pressed against the restriction flanges 24 as the coupling 30 is tightened. The guidable block 25, which is connected to the base block 13, is thus reliably supported by the guide groove 12 having the restriction flanges 24. Therefore, the retaining members 15 configured as described above, which are designed to secure the carriage to be transported 14, can be more reliably supported on the vehicle body 2.

The retaining structure relating to the present embodiment have the guide grooves 12 each having the slit 23 opening upward in the vertical direction. The upper edge of the slit 23 is a substantially horizontal flat surface. Therefore, the base block 13 supporting the retaining member 15 can be stably supported on the substantially horizontal flat surface of the upper edge of the slit 23. In addition, the base block 13 can smoothly move on the guide groove 12 to reposition the retaining member 15, since the base block 13 is placed on the flat upper edge of the slit 23.

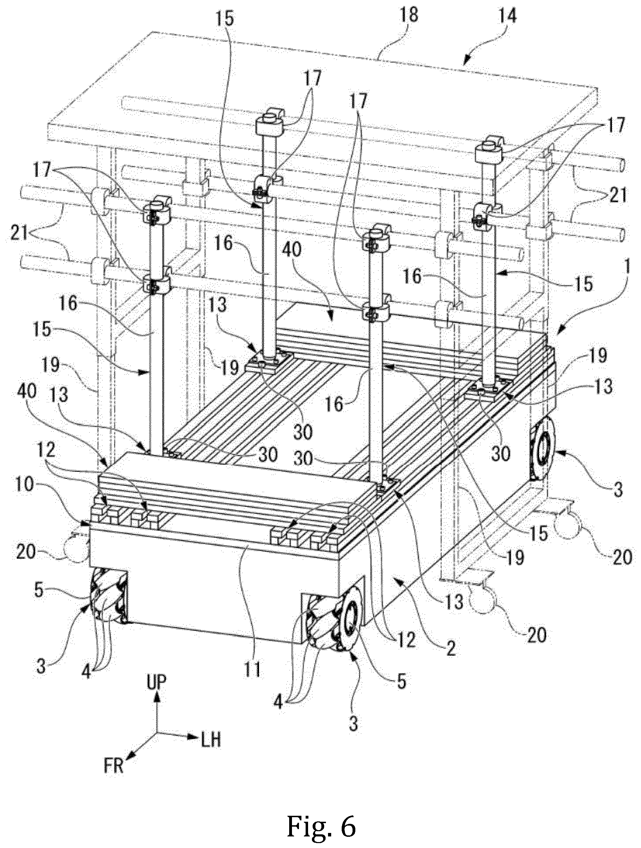

According to the retaining structure relating to the present embodiment, the upper surfaces of the guide grooves 12, which are separated from each other in the left-right direction, are flat surfaces at the same height. Therefore, an object 40 can be stably placed across the upper edges of the guide grooves 12, as shown in Fig. 6. Fig. 6 illustrates how to place the object 40. Fig. 6 is a perspective view corresponding to Fig. 1. According to the retaining structure relating to the present embodiment, the object 40 can be conveniently transported by effectively using the dead space above the guide grooves 12.

According to the retaining structure relating to the present embodiment, the carriage retaining block 10 having the guide grooves 12 (guide track) provided thereon is removably attached to the vehicle body 2 by bolting or other means. Depending on the carriage to be transported 14 and the destination, the guide grooves 12 (guide tracks) can be replaced with different guide tracks having appropriate size and shape. The present embodiment can thus permit the carriage to be transported 14 to have a greater variety of specifications and produce the above-described advantageous effects when used in various environments.

### <Second Embodiment>

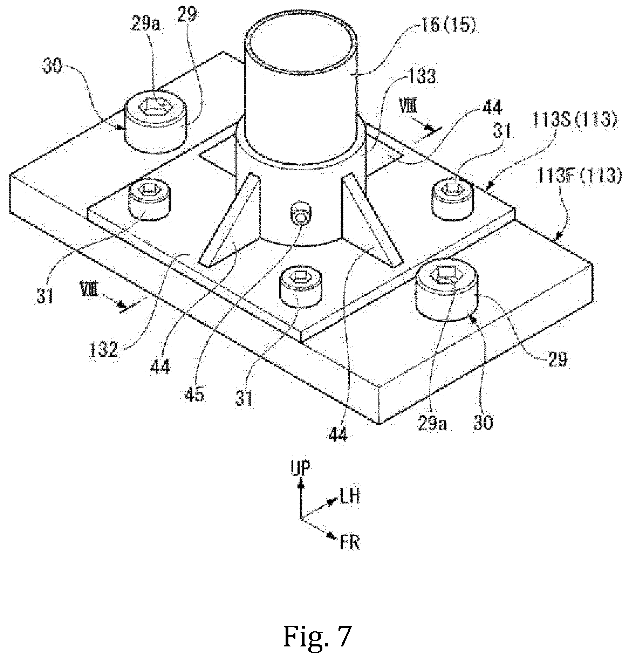

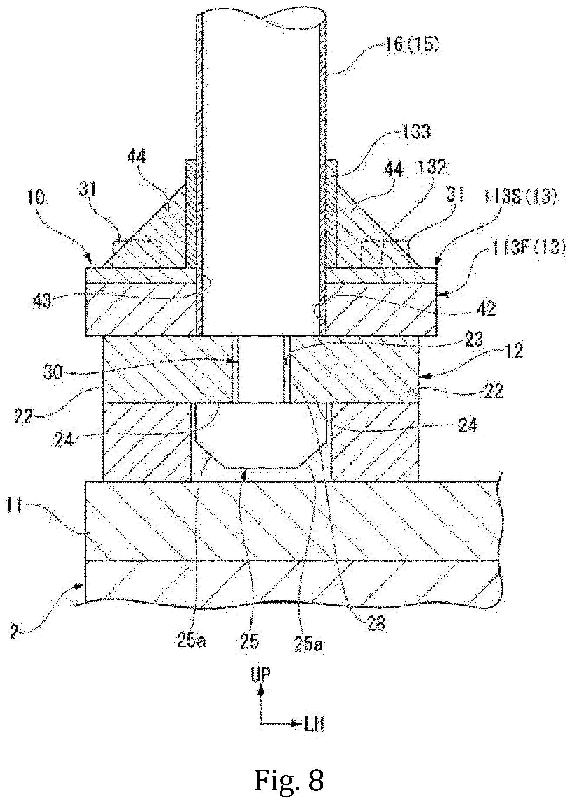

Fig. 7 is a perspective view showing a support portion of a retaining member 15 relating to a second embodiment. Fig. 8 is a sectional view along a line VIII-VIII in Fig. 7. The second embodiment is different from the first embodiment in terms of the structure of a base block 113 supporting the retaining member 15. In other respects, the second embodiment is configured in the same way as the first embodiment. The base block 113 includes a first block 113F and a second block 113S. The first block 113F is detachably secured onto the guide grooves 12 by means of the guidable block 25 and coupling 30. The second block 113S is secured onto the upper side of the first block 113F by means of a plurality of bolts 31.

The first block 113F has a fitting hole 42 at substantially the center. The fitting hole 42 extends through the first block 113F in the top-bottom direction. The inner diameter of the fitting hole 42 is substantially equal to the outer diameter of the lower end of the support pipe 15 of the retaining member 15. The fitting hole 42 receives therein the lower end of the support pipe 16.

The second block 113S includes a plate portion 132 and a tubular portion 133. The plate portion 132 is secured onto the upper surface of the first block 113F by means of the bolts 31. The tubular portion 133 protrudes upward substantially from the center of the plate portion 132. The plate portion 132 has a through hole 43 that is aligned with and has substantially the same diameter as the fitting hole 42 in the first block 113F. The inner diameter of the tubular portion 133 is equal to that of the through hole 43. The lower end of the retaining member 15 is inserted through the tubular portion 133 and through hole 43 and then fittingly received in the fitting hole 42 in the first block 113F having a certain thickness.

A plurality of reinforcement ribs 44 are secured onto the outer surface of the tubular portion 133. The reinforcement ribs 44 are secured at their lower end onto the upper surface of the plate portion 132. The tubular portion 133 can avoid falling as the reinforcement ribs 44 can support. After the lower end of the support pipe 16 is inserted through the tubular portion 133 and through hole 43 and then fittingly received in the fitting hole 42 in the first block 113F, the support pipe 16 is secured onto the tubular portion 133 using a screw 45 penetrating through the circumferential wall of the tubular portion 133.

According to the retaining structure relating to the present embodiment, the lower end of the support pipe 16 passes through the second and first blocks 113S and 113F and is fittingly received into the tubular portion 133, through hole 43 and fitting hole 42. This means that the lower end of the support pipe 16 can be held from the outside in the radial direction with a sufficiently deep fitting margin. In addition, the reinforcement ribs 44 are secured onto the outer surface of the tubular portion 133 of the second block 113S in the present embodiment. The lower surface of the reinforcement ribs 44 are secured onto the upper surface of the plate portion 132. This can reliably save the support pipe 16, which may retain the carriage to be transported, from falling. The retaining structure relating to the present embodiment can thus provide the retaining members 15 that can rigidly and stably retain various carriages to be transported having different specifications.

### <Third Embodiment>

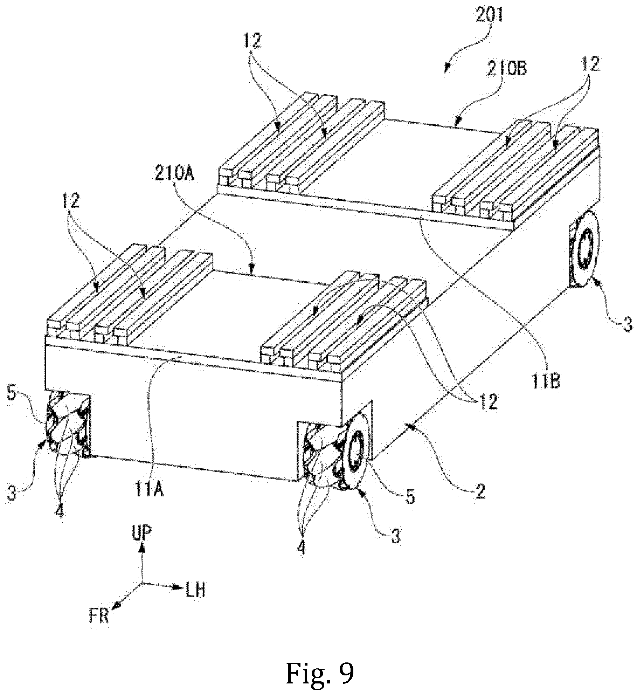

Fig. 9 is a perspective view showing a transport vehicle 201 relating to a third embodiment. In the transport vehicle 201 relating to the third embodiment, two carriage retaining blocks 210A and 210B that are next to each other in the front-rear direction are provided in place of a single block. The carriage retaining blocks 210A and 210B are detachably secured onto the upper surface of the vehicle body 2. The front carriage retaining block 210A has a base plate 11A. The base plate 11A has a length that is shorter than half the length of the upper surface of vehicle body 2 in the front-rear direction. The base plate 11A has, on its upper side, four guide grooves 12 parallel to each other in the left-right direction and extending along the front-rear direction. Similarly, the rear carriage retaining block 210B has a base plate 11B. The base plate 11B has a length that is shorter than half the length of the upper surface of vehicle body 2 in the front-rear direction. The base plate 11B has, on its upper side, four guide grooves 12 parallel to each other in the left-right direction and extending along the front-rear direction.

The front and rear carriage retaining blocks 210A and 210B are spaced apart from each other in the front-rear direction on the upper surface of the vehicle body 2. Base blocks for supporting the retaining members are detachably provided onto the respective guide grooves 12 of the front and rear carriage retaining blocks 210A and 210B, as in the first embodiment described above.

### <Fourth Embodiment>

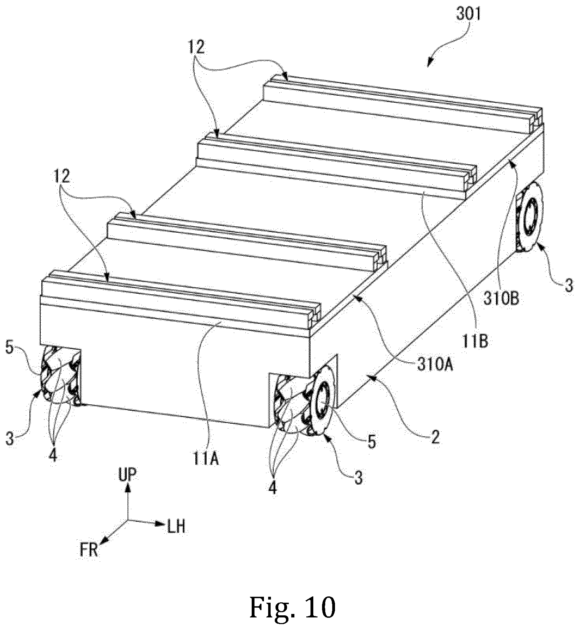

Fig. 10 is a perspective view showing a transport vehicle 301 relating to a fourth embodiment. In the transport vehicle 301 relating to the fourth embodiment, two carriage retaining blocks 310A and 310B are detachably secured onto the upper surface of the vehicle body 2 and spaced apart from each other in the front-rear direction. The front and rear carriage retaining blocks 310A and 310B of the transport vehicle 301 each have two guide grooves 12 extending in the left-right direction on the upper surface of the base plate 11A and 11B. In the present embodiment, base blocks for supporting the retaining members are also detachably provided onto the respective guide grooves 12, as in the first embodiment described above.

### <Fifth Embodiment>

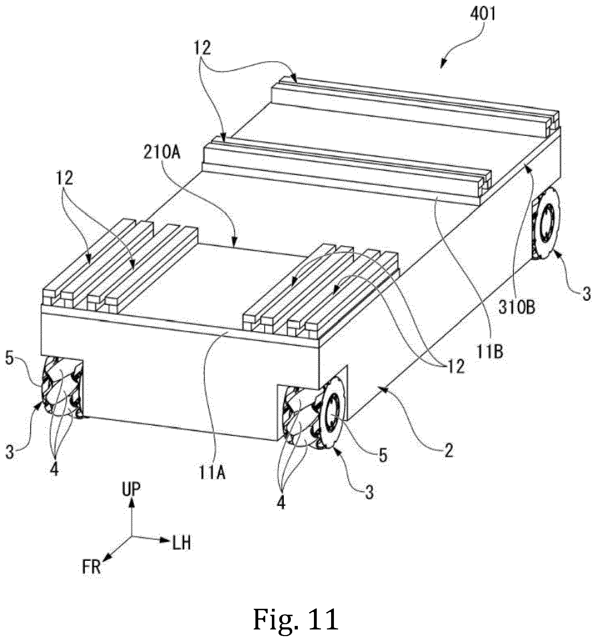

Fig. 11 is a perspective view showing a transport vehicle 401 relating to a fifth embodiment. In the transport vehicle 401 relating to the fifth embodiment, two carriage retaining blocks 210A and 310B are detachably secured onto the upper surface of the vehicle body 2 and spaced apart from each other in the front-rear direction. The front carriage retaining block 210A has on the upper surface of the base plate 11A, four guide grooves 12 extending along the front-rear direction. The rear carriage retaining block 310B has on the upper surface two guide grooves 12 extending in the left-right direction. In the present embodiment, base blocks for supporting the retaining members are also detachably provided onto the respective guide grooves 12, as in the first embodiment described above.

### <Sixth Embodiment>

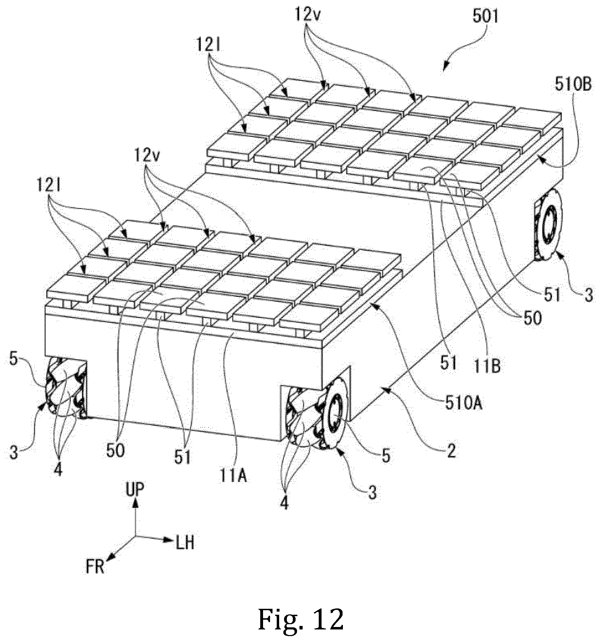

Fig. 12 is a perspective view showing a transport vehicle 501 relating to a sixth embodiment. In the transport vehicle 501 relating to the sixth embodiment, two carriage retaining blocks 510A and 510B are detachably secured onto the upper surface of the vehicle body 2 and spaced apart from each other in the front-rear direction. The front and rear carriage retaining blocks 510A and 510B have a plurality of groove forming pieces 50 secured on the respective base plates 11 via struts 51.

The groove forming pieces 50 are plate members having a square shape and the same size. The groove forming pieces 50 are arranged in a matrix pattern with a certain gap being provided between them in the front-rear and left-right directions. In the present embodiment, the groove forming pieces 50 are arranged to form a plurality of guide grooves 12v extending in the front-rear direction and a plurality of guide grooves 12l extending in the left-right direction. In the present embodiment, base blocks for supporting the retaining members are also detachably provided onto the guide grooves 12v and 12l, as in the first embodiment described above. In the present embodiment, the base blocks can be positioned anywhere in the front-rear and left-right directions along the guide grooves 12v and 12l of the carriage retaining blocks 510A and 510B.

The retaining structures relating to the above-described third to sixth embodiments all have two separate carriage retaining blocks each including the guide grooves 12 (12v, 12l). In these embodiments, the position and orientation of the guide grooves 12 (12v, 12l) on the vehicle body 2 can be determined appropriately depending on the specifications of the carriage to be transported, while the guide grooves 12 (12v, 12l) are prevented from occupying an unnecessary space. The third to sixth embodiments can thus provide the transport vehicles 201 to 501 that can successfully have reduced size and weight while still capable of transporting carriages having various specifications.

In the sixth embodiment shown in Fig. 12, the groove forming pieces 50 arranged in a matrix pattern define both the guide grooves 12v extending in the front-rear direction and the guide grooves 12l extending in the left-right direction. According to the retaining structure of the sixth embodiment, the base blocks (retaining members) can be more freely positioned, so that the transport vehicle can transport carriages having a greater variety of specifications. In the embodiment shown in Fig. 12, the groove forming pieces 50 are arranged in a matrix pattern on the carriage retaining blocks 510A and 510B spaced apart from each other in the front-rear direction, to define the guide grooves 12v and 12l. Alternatively, a single carriage retaining block may be provided, on which the guide grooves 12v and 12l can be formed in the same manner.

### <Seventh Embodiment>

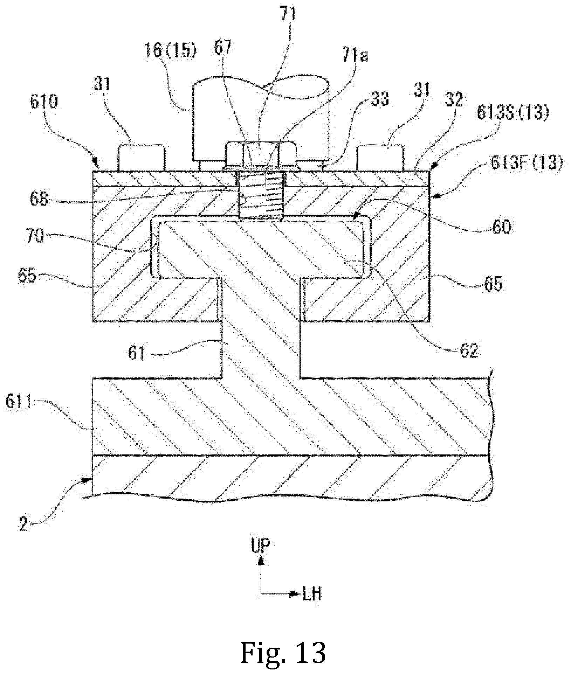

Fig. 13 is a sectional view showing a support portion of the retaining member 15 relating to a seventh embodiment and corresponds to Figs. 2 and 8. As for the retaining structure relating to the present embodiment, the guide track provided on the vehicle body 2 is constituted by a guide rail 60. The guide rail 60 includes a post portion 61 and a rail body 62. The post portion 61 rises from the upper surface of the base plate 11. The rail body 62 is formed on the upper end of the post portion 61 and wider in the left-right direction than the post portion 61. The retaining structure relating to the seventh embodiment has a base block 613 for supporting the retaining member 15. The base block 613 includes a first block 613F and a second block 613S. The first block 613F is held on the upper surface of the rail body 62 of the guide rail 60. The second block 613S is overlaid and secured onto the upper surface of the first block 613F.

The first block 613F includes a pair of guide arms 65. The guide arms 65 extend downward from the left and right lateral edges and are shaped like a hook (L-shaped). The guide arms 65 face the lateral and lower surfaces of the rail body 62 of the guide rail 60. When combined with the guide arms 65, the lower surface of the upper wall of the first block 613F forms a guide groove 70 surrounding the rail body 62. The base block 613 is configured such that the guide groove 70 of the first block 613F is guided in the front-rear direction along the rail body 62 of the guide rail 60. In the present embodiment, the pair of guide arms 65 integrated with the first block 613F constitutes the guidable portion.

The second block 613S includes a plate portion 32 and a tubular portion 33 rising upward from the plate portion 32. The plate portion 32 is fastened and secured onto the upper surface of the first block 613F using a plurality of bolts 31. The tubular portion 33 fittingly supports the support pipe 16 of the retaining member 15, as in the first embodiment.

The upper wall of the first block 613F has a threaded hole 68 in the middle in the left-right direction. The threaded hole 68 extends through the first block 613F in the top-bottom direction. The plate portion 32 of the second block 613S has a through hole 67 that is aligned with the threaded hole 68. Into the threaded hole 68 in the first block 613F, a shaft portion 71a of a fastener bolt 71, which passes through the through hole 67 of the plate portion 32, is screwed. The fastening bolt 71 is tightened by a tightening tool from the upper side of the plate portion 32. When the fastening bolt 71 is tightened more than a predetermined amount, the tip of the shaft portion 71a is pressed against the upper surface of the rail body 62 of the guide rail 60. As a result, the base block 613 is secured at a certain position on the guide rail 60. In the present embodiment, the fastening bolt 71 serves as the fastener that is configured to secure the base block 613 on the guide rail 60 (guide track) at a certain position.

In the retaining structure relating to the present embodiment described above, the base block 613 for supporting the retaining member 15 is integrated with the guide arms 65, which constitute the guidable portion, and they can move together along the guide rail 60. The base block 613 can be secured at any position on the guide rail 60 using the fastening bolt 71, which serves as the fastener. The present embodiment is different from the first embodiment in terms of the specific details such as the guide track, guidable portion and fastener, but can still produce the same advantageous effects. Specifically, various carriages different in terms of the size, shape and other specifications can be retained by appropriately adjusting the position of the retaining member 15 supported on the vehicle body 2. The retaining structure relating to the present embodiment can thus provide for simplified configuration and allows the transport vehicle 1 to transport various carriages having different specifications.

The present invention is not limited to the foregoing embodiments. Various modifications can be made within the scope of the present invention. For example, the above-described embodiments employ the carriage to be transported 14 that has the leg pillars 19 protruding downward from the four corners of the placement plate 18, with the lower ends of the leg pillars 19 having the casters 20 mounted. The carriage to be transported 14 can have any other configurations and shapes. The carriage to be transported 14 can be configured and shaped in any other manners as long as they have wheels or the like to be capable of moving on a road or street surface.

According to the above-described embodiments, the transport vehicles are unmanned transport vehicles, but may alternatively be transport vehicles with drivers on board.

According to the above-described embodiments, the retaining member 15 includes the support pipe 16 and the pair of clamping devices 17. The retaining member can be configured in any other manners as long as it can retain the carriage to be transported 14 while being supported by the base block 13. For example, the base block 13 may support any other structures than the pipe-shaped member, and the carriage to be transported 14 may be retained by any other retaining mechanisms than the clamping devices 17.

According to the third to sixth embodiments, the blocks having the guide track are secured onto the upper surface of the vehicle body 2 of the transport vehicle by bolting or the like. At least one of the blocks may be arranged at a certain position by an actuator. The number of blocks on the upper surface of the vehicle body 2 is not limited to two. There may be three or more blocks.

According to the above-described embodiments, the guide track is embodied as the guide grooves and guide rails, but not limited to such. The guide track may be a combination of guide grooves and guide rails.

According to the foregoing description, the transport vehicle is configured to transport the carriage to be transported, but the transport vehicle may transport any other objects. For example, the transport vehicle may transport, shelves, pallets, forklifts, lifts, cranes, robots, etc.

In the embodiments disclosed herein, multiple components may be integrated into a single component, or conversely, a single component may be divided into multiple components. Irrespective of whether or not the constituent parts are integrated, they are acceptable as long as they are configured to attain the object of the invention.

### LIST OF REFERENCE NUMBERS

- 1, 201, 301, 401, 501: transport vehicle
- 2: vehicle body
- 3: drive wheel
- 12: guide groove (guide track)
- 13, 113, 613: base block
- 14: carriage to be transported (transportable object)
- 15: retaining member
- 24: prevention flange
- 25: guidable block (guidable portion)
- 30: coupling (fastener)
- 60: guide rail (guide track)
- 65: guide arm (guidable portion)
- 71: fastener bolt (fastener)

## Claims

1. A retaining structure of a transport vehicle (1, 201, 301, 401, 501), comprising:
a guide track (12, 60) provided on a vehicle body (2);
a base block (13, 113, 613) for supporting a retaining member (15) configured to retain a transportable object (14);
a guidable portion (25, 65) configured to move together with the base block (13, 113, 613) as guided along the guide track (12, 60); and
a fastener (30, 71) configured to secure the base block (13, 113, 613) on the guide track (12, 60) at a certain position.

2. The retaining structure of claim 1,
wherein the guide track (12) is constituted by a guide groove (12) having (i) a recess opening toward one direction and extending in a direction intersecting with a vertical direction and (ii) a restriction flange (24) projecting inwardly from an opening edge of the recess,
wherein the guidable portion (25) is movably housed in the recess, and
wherein the fastener (30) is constituted by a coupling (30) that is configured to secure the guidable portion (25) such that the guidable portion (25) is pressed against the restriction flange (24).

3. The retaining structure of claim 2,
wherein the guide groove (12) opens upward in the vertical direction, and
wherein an upper edge of an opening of the guide groove (12) is constituted by a substantially horizontal flat surface.

4. The retaining structure of claim 3,
wherein the guide track (12) is constituted by a plurality of guide grooves (12),
wherein the plurality of guide grooves (12) each correspond to the guide groove (12),
wherein the plurality of guide grooves (12) are provided on the vehicle body (2),
wherein the plurality of guide grooves (12) have a plurality of openings opening upward in the vertical direction, and the plurality of guide grooves (12) are in a one-to-one correspondence with the plurality of openings, and
wherein flat surfaces of upper edges of the plurality of openings are at a same height.

5. The retaining structure of claim 1, wherein the guide track (12, 60) is detachably attached to the vehicle body (2).

6. The retaining structure of claim 5, wherein the guide track (12, 60) is provided on a plurality of blocks separated from each other.

7. A transport vehicle (1, 201, 301, 401, 501) comprising:
a vehicle body (2) having a drive wheel (3);
a guide track (12, 60) provided on the vehicle body (2);
a base block (13, 113, 613) for supporting a retaining member (15) configured to retain a transportable object (14);
a guidable portion (25, 65) configured to move together with the base block (13, 113, 613) as guided along the guide track (12, 60); and
a fastener (30, 71) configured to secure the base block (13, 113, 613) on the guide track (12, 60) at a certain position.

8. The transport vehicle (1, 201, 301, 401, 501) of claim 7, wherein the guide track (12, 60) is partly positioned directly above the drive wheel (3).
